# EUROPEAN PATENT SPECIFICATION

(11) **EP 2 405 701 B1**
(45) Date of publication and mention of the grant of the patent: **27.03.2013**
(21) Application number: 11172328.4
(22) Date of filing: 01.07.2011
(51) Int. Cl.: H04W 72/08, H04B 1/7143

(54) **Frequency selection in a frequency hopping radio communications system**
Frequenzauswahl in einem Frequenzsprung-Funkkommunikationssystem
Sélection de fréquence dans un système de radiocommunications à saut de fréquence

(30) Priority: 09.07.2010 JP 2010156845
(43) Date of publication of application: 11.01.2012
(73) Proprietor: HITACHI, LTD., Tokyo 100-8280 (JP)
(72) Inventor: Mitsuyoshi, Naoki, Japan, Tokyo 100-8220 (JP); Yamasaki, Ryota, Tokyo, Tokyo 100-8220 (JP); Onuki, Hiroshi, Tokyo, Tokyo 100-8220 (JP)
(74) Representative: Paget, Hugh Charles Edward

(56) References cited:
- JP-A- 2008 099 233
- JP-A- 2009 171 078
- US-A1- 2005 020 271
- US-B1- 6 240 126
- US-B2- 7 440 484

## Description

### BACKGROUND OF THE INVENTION

### Field of the Invention

The present invention relates to a radio communications system and a method of radio communication in which frequency hopping communication is performed between a base station and a mobile station.

In addition, the present invention relates to a technology of maintaining or updating a high-quality communication line over a long period to thereby provide the high-quality communication line, in a method of radio communication that is used for a method of radio train control and a radio train control system. The high-quality communication line can be expected to be maintained over a long period of several decades.

### Description of the Related Art

In a method of train control and a train control system, there is a tendency to reduce costs of a railway communications system, and introduction of a train control system utilizing a radio frequency of 2.4 G band for which a license is not required worldwide has been considered.

However, there exist a large number of standards utilizing the radio frequency of 2.4 G band, such as IEEE 802.11 b/g and Bluetooth. These standards are used by various apparatuses such as a wireless LAN and a mobile apparatus, and hence the 2.4 G band is a frequency band in which an interference problem is inescapable.

In addition, in the method of train control and the train control system, introduction of a radio communications system using a general-purpose wireless LAN has been considered. When the general-purpose wireless LAN is introduced into the train control system, because a mobile station moves at high speed, it is necessary that there be no delay in a handover in which the mobile station changes over from one base station to another base station.

Japanese Patent Laid-Open Publication No. 2009-171078 (Patent Document 1) discloses an invention that relates to a radio communications system using a frequency hopping system, in which a frequency channel on which influences of an interference signal and noise power are small is to be selected. According to the disclosed invention, in the radio communications system including: base stations provided along a predetermined route; and a mobile station that is moving on the predetermined route, each base station includes first and second hopping tables and selects a hopping table to be used in accordance with conditions of an interference signal. Frequency channels are set in advance to each hopping table so that an interference with adjacent base stations does not occur in both cases where the first hopping table is selected and where the second hopping table is selected. As a result, it is possible to select an optimal frequency channel with no interference, without the need to transmit/receive preliminary information such as use conditions of the frequency channel, between the base stations.

Japanese Patent Laid-Open Publication No. 2008-99233 (Patent Document 2) discloses an invention that relates to a train control system that smoothly switches radio frequencies at which train control information is transmitted/received between: a plurality of radio base stations provided along a railway track on which a train is running; and radio mobile stations mounted on the train. According to the disclosed invention, in the train control system that performs radio communication between: the plurality of mobile stations that are moving on a predetermined route; and the plurality of base stations provided along the predetermined route, a different communication frequency is allocated to each base station, each mobile station searches for communication frequencies of the plurality of base stations provided along the predetermined route, and the control information is transmitted/received at a specific radio frequency searched for, between a base station corresponding to the specific radio frequency and the mobile station.

The method disclosed in Japanese Patent Laid-Open Publication No. 2009-171078 (Patent Document 1) is exemplified as a method of providing a high-quality communication line. In the disclosed method, description is given of a technology in which two frequency hopping patterns are set in advance, and the frequency hopping patterns are switched in accordance with conditions of an interference signal.

In addition, the method disclosed in Japanese Patent Laid-Open Publication No. 2008-99233 (Patent Document 2) is exemplified as a method of providing a handover with no delay. In the disclosed method, the mobile station searches for a communication frequency for each base station, and performs communication at a found frequency. Therefore, the need to perform a negotiation before the handover is eliminated.

Frequency hopping is exemplified as general countermeasures against the frequency interference problem. The frequency hopping is a method of performing communication while changing frequencies in accordance with a predetermined frequency hopping pattern table. Also in Japanese Patent Laid-Open Publication Nos. 2009-171078 and 2008-99233 (Patent Documents 1 and 2), communication quality is enhanced by the frequency hopping pattern method.

However, according to the technologies disclosed in Japanese Patent Laid-Open Publication Nos. 2009-171078 and 2008-99233 (Patent Documents 1 and 2), because the negotiation for the handover is not performed in advance, even if communication is performed while changing channels in accordance with the predetermined frequency hopping patterns, the communication does not necessarily become successful with the selected frequency without being subjected to an interference. In addition, according to the method disclosed in Japanese Patent Laid-Open Publication No. 2008-99233 (Patent Document 2), in which the frequency hopping patterns are switched in accordance with communication conditions, an error caused by an interference is determined even in the case where a mobile station does not exist.

Against the above-mentioned problems, the present invention has an object to accurately understand a channel interference occurring under actual use environments and obtain channel interference conditions without deteriorating reliability in communication inherent to a radio communications system, in a method of train control and a train control system that are required to perform a handover with no delay. If the channel interference is accurately understood, it becomes possible to update as appropriate a frequency hopping pattern table, to thereby provide high-quality communication.

US 2005/0020271 proposes a frequency hopping method for switching a hopping carrier frequency in a predetermined hopping pattern based on a hopping carrier table.

### SUMMARY OF THE INVENTION

The present invention provides, in a first aspect, a radio communications system according to claim 1, and, in a second aspect, a method of radio communication according to claim 4.

According to the present invention, it is possible to collect channel interference conditions without deteriorating reliability in communication. In addition, communication for collecting interference conditions is performed immediately after communication is performed normally, and hence a communication error caused by physical blocking or train absence can be excluded, so that only a pure interference can be collected. In addition, it is possible to determine in which of downstream communication data and upstream communication data an interference occurs.

### BRIEF DESCRIPTION OF THE DRAWINGS

Figure 1 is a configuration diagram of a radio communications system according to an embodiment of the present invention;
Figure 2 is a basic sequence diagram of the radio communications system according to the embodiment of the present invention;
Figure 3 is a functional block diagram of an AP according to the embodiment of the present invention;
Figure 4 illustrates a configuration of a channel interference collection table according to Embodiment 1 of the present invention;
Figure 5 illustrates a configuration of a reception result storage table according to Embodiment 1 of the present invention;
Figure 6 is a sequence diagram of interference channel collection of a radio communications system according to Embodiment 1 of the present invention;
Figure 7 is a flow chart of channel selection processing included in an AP according to Embodiment 1 of the present invention;
Figure 8 is a flow chart of RF reception processing included in the AP according to Embodiment 1 of the present invention;
Figure 9 is a sequence diagram of reception electric field strength transmission according to Embodiment 2 of the present invention; and
Figure 10 illustrates part of a response data frame according to Embodiment 2 of the present invention.

### DETAILED DESCRIPTION OF THE PREFERRED EMBODIMENTS

Hereinafter, a radio communications system to which the present invention is applied is described in detail with reference to the drawings.

### [Embodiment 1]

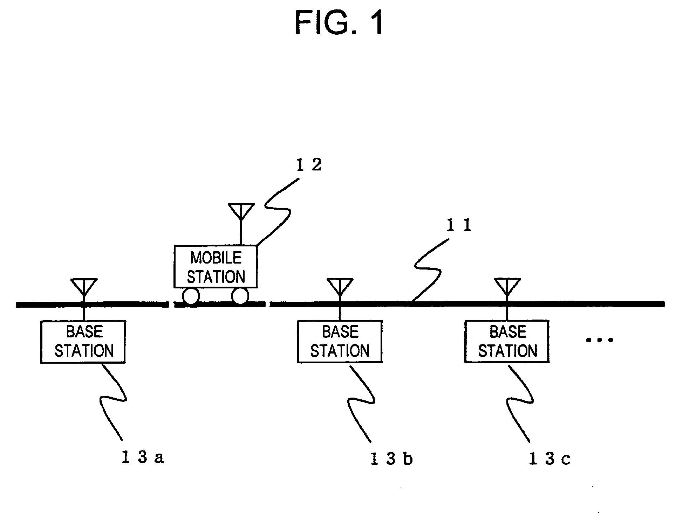

Figure 1 is a diagram illustrating one configuration of a radio communications system according to Embodiment 1 of the present invention. In the radio communications system illustrated in Figure 1, a plurality of base stations 13a to 13c are provided for each approximately 350 m on a predetermined route 11. A mobile station 12 changes over the base stations 13a, 13b, 13c ... with which the mobile station 12 communicates, while moving on the predetermined route 11.

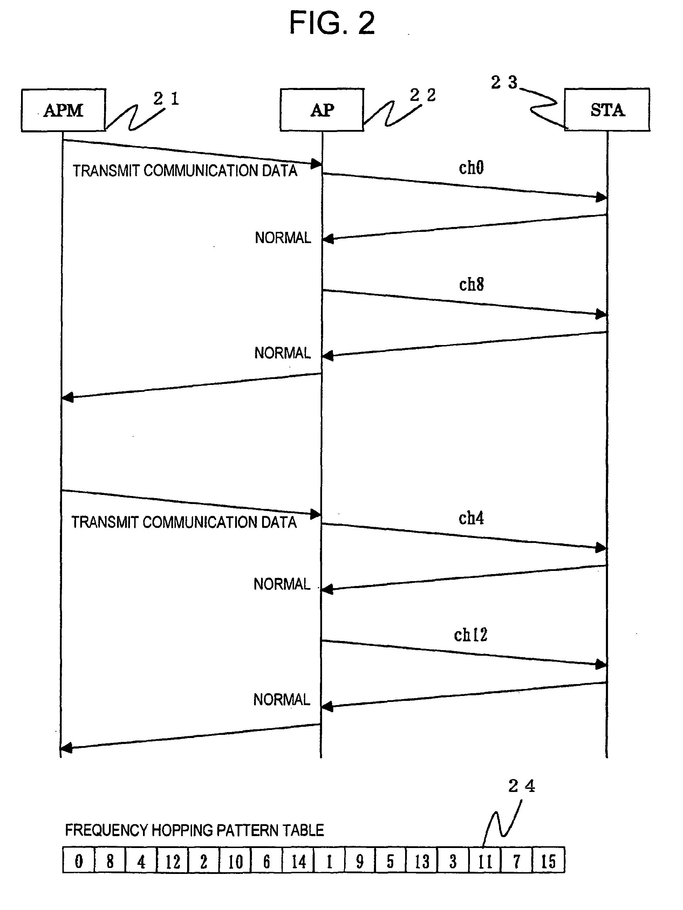

Figure 2 is a diagram illustrating a basic sequence of the radio communications system that is performed between the base stations 13a, 13b, 13c ... and the mobile station 12 described with reference to Figure 1.

Describing in order the basic sequence illustrated in Figure 2, an access point master (hereinafter, simply spelled as APM) 21 that overall controls access points (hereinafter, simply spelled as APs) 22 of the plurality of base stations 13a, 13b, 13c ... transmits communication data to each AP 22 in a given cycle. Conventional radio channels include 13 channels, three of which have frequencies that do not overlap with each other, whereas channels according to the present invention are divided into 16 channels having frequencies that do not overlap with each other. Communication is performed at an interval of about 500 msec.

As illustrated in Figure 2, the AP 22 acquires a transmission channel (one of 16 channels formed of channels 0 to 15) from a frequency hopping pattern table 24 stored internally, and transmits communication data to a mobile station (hereinafter, simply spelled as STA) 23. Then, after a given period of time, the AP 22 takes out the next channel from the frequency hopping pattern table 24, and transmits the communication data again to the mobile station 23 through a different channel. After completion of the second transmission, the AP 22 transmits response data from the mobile station 23 to the APM 21. The AP 22 according to the present embodiment performs frequency hopping (time diversity) twice in one cycle, to thereby increase the success probability of exchanging the communication data with the mobile station 23. Figure 2 illustrates a state where the channel 0 and the channel 8 are respectively taken out for the first and second transmission frequencies, and then in the next cycle, the channel 4 and the channel 12 are respectively taken out for the third and fourth transmission frequencies. Figure 2 illustrates a case where communications through all the channels are normal.

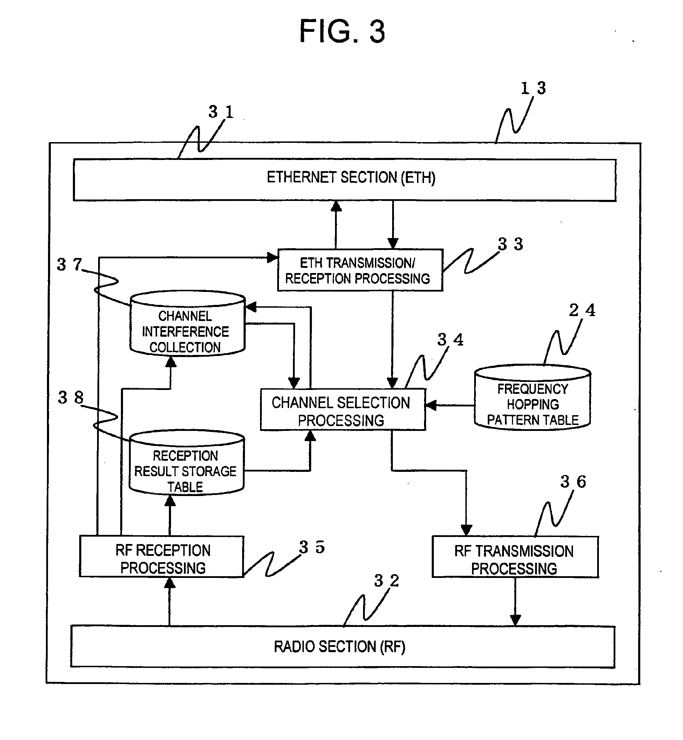

Figure 3 is a diagram illustrating functional blocks of the AP 22. An Ethernet (registered trademark) section 31 takes charge of a function of transmitting/receiving communication data to/from the APM 21. A radio section 32 takes charge of a function of transmitting/receiving, by radio, communication data to/from the STA 23. ETH transmission/reception processing 33 performs processing of transferring communication data received from the APM 21 to channel selection processing 34 and transferring communication data received from RF reception processing 35 to the Ethernet section 31.

When the channel selection processing 34 is activated by the ETH transmission/reception processing 33, the channel selection processing 34 decides a channel from the frequency hopping pattern table 24 on the basis of a serial number contained in the communication data, and issues a transmission request to RF transmission processing 36. Then, after a given period of time, the channel selection processing 34 changes channels on the basis of the frequency hopping pattern, and issues the second transmission request. In the second transmission request, the channel selection processing 34 refers to a reception result storage table 38 that stores therein reception results from the STA 23 and a channel interference collection table 37 that stores therein channel collection modes and the like, to thereby decide a transmission channel.

The RF reception processing 35 checks reasonableness of the communication data received from the radio section 32 to store the checking result into the reception result storage table 38 and the channel interference collection table 37 and transfer normal communication data to the ETH transmission/reception processing 33. The RF transmission processing 36 is activated by the channel selection processing 34 to request the RF section to transmit communication data through the channel decided by the channel selection processing 34.

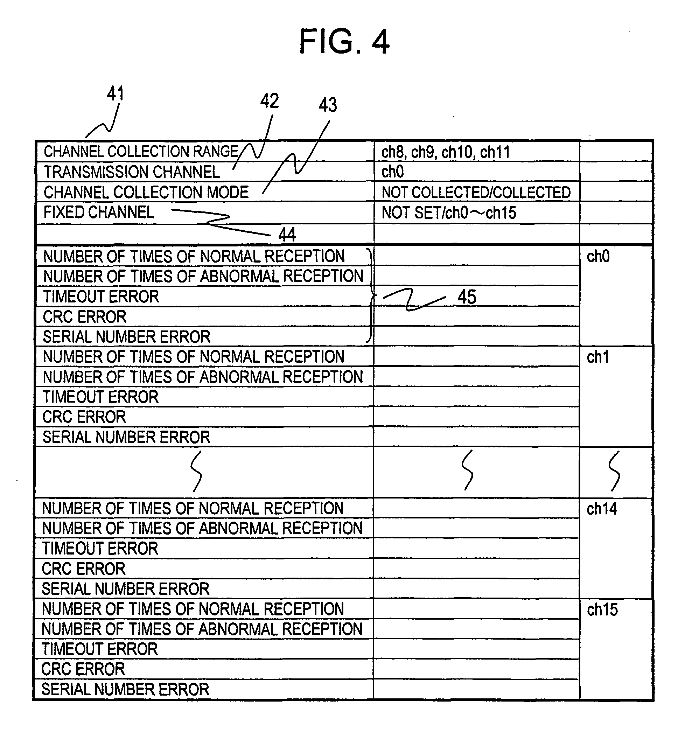

Figure 4 is a diagram illustrating a configuration of the channel interference collection table. A channel that the AP 32 can set as a transmission channel in place of a channel whose communication result is poor is set to a channel collection range 41. The channel collection range 41 serves to prevent, in the case where the plurality of APs 32 are provided, adjacent APs from transmitting data through an overlapped channel for collecting a channel interference, and thus is set so that channels used by adjacent APs are not overlapped with each other.

A channel that is currently used for transmission is set to a transmission channel 42. Whether or not channel interference collection is performed is set to a channel collection mode 43. An arbitrary channel is set to a fixed channel 44, whereby a specified channel interference is collected. In addition, the number of times of normal reception, the number of times of abnormal reception, and the like are stored as statistical data.

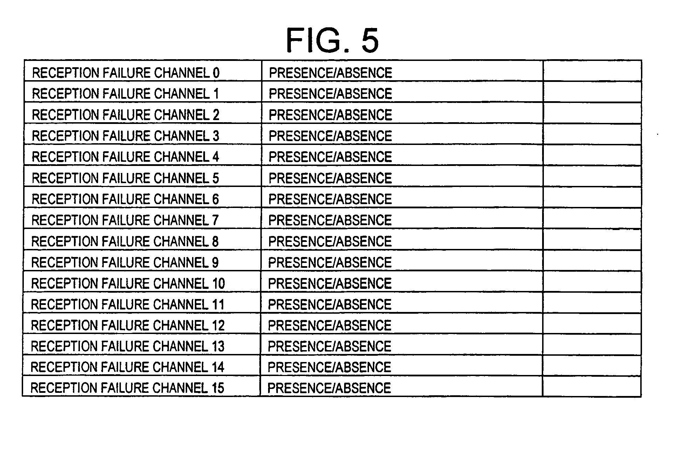

Figure 5 is a diagram illustrating a configuration of the reception result storage table. In the case where the communication data from the STA 23 is determined as a reception failure, a reception failure channel of the corresponding channel is set to reception failure channels 0 to 15 (51).

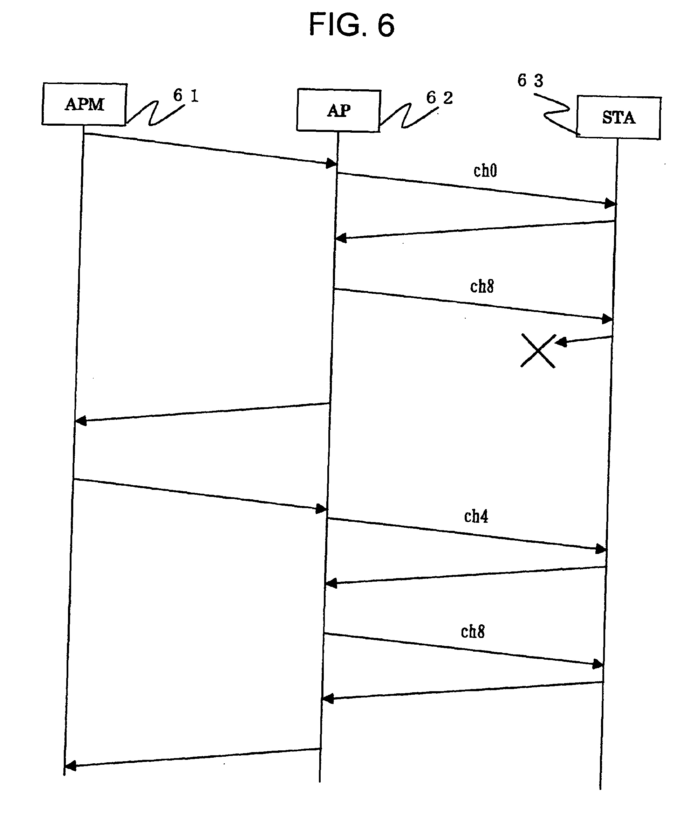

Figure 6 illustrates a sequence of collecting channel interference conditions. When an AP 62 receives communication data from an APM 61, the AP 62 acquires the transmission channel 0 from the frequency hopping pattern table 24 and transmits the transmission channel 0 to an STA 63. After reception of response communication data from the STA 63, the AP 62 performs the second transmission through a different transmission channel.

In the second transmission, the AP 62 checks whether or not there is a reception failure channel in the reception result storage table. In the case where there is not any reception failure channel, the AP 62 transmits data through the channel 8 according to the frequency hopping pattern table 24. Assuming that the communication result of this time is abnormal, the AP 62 does not receive response communication data from the STA 63 with respect to the communication data transmitted through the channel 8, and thus records reception failure presence to the corresponding channel in the reception result storage table.

In the next cycle, the AP 62 acquires the transmission channel 4 from the frequency hopping pattern table 24, and transmits therethrough communication data to the STA 63. It is assumed that the communication result of this time is normal. Next, because the communication data transmission/reception through the channel 4 is successful, the AP 62 checks as processing of collecting channel properties whether or not there is a reception failure channel in the reception result storage table, and further checks whether or not the channel 8 through which the communication is failed falls within the channel collection range, and the channel 8 is used again as a property collection channel. It should be noted that Figure 6 illustrates the case where the response communication data is received again. In the case where the response communication data is not received, the AP 62 records reception failure presence to the channel 8 in the reception result storage table 38, and records the number of times of abnormal reception as statistical data 45.

According to the embodiment of the present invention, as described above, during two transmissions in one cycle from the AP 62 to the STA 63, the AP 62 performs the second transmission for interference checking after the first communication that is normal, whereby a channel interference can be checked without reducing reliability in communication. In addition, because the communication data for checking is transmitted after the first communication that is normal, the possibility of reception abnormality due to physical blocking or the like is low, and hence only a channel interference can be accurately determined.

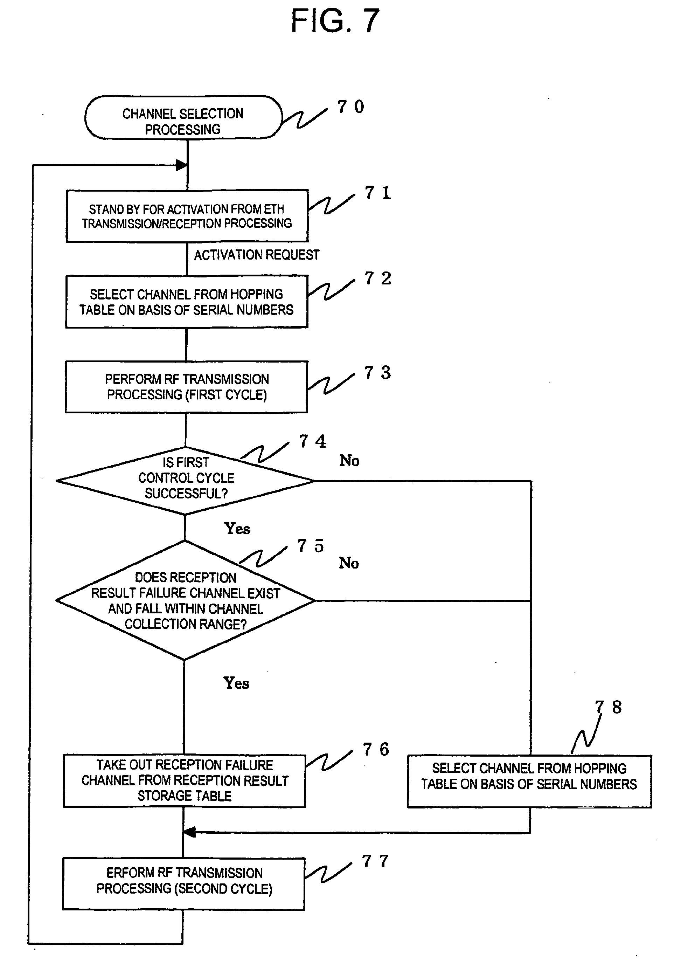

Figure 7 shows a flow chart of the channel selection processing according to Embodiment 1. After the application of power (Step 70), the channel selection processing stands by for activation from the ETH transmission/reception processing (Step 71). After the reception of an activation request, the channel selection processing selects a channel from the frequency hopping pattern table 24 on the basis of a serial number contained in the communication data (Step 72). After the selection of the channel, the channel selection processing requests the RF transmission processing to transmit communication data (Step 73). After that, the channel selection processing checks a response result from the STA 12 with respect to the communication data transmission (Step 74). If the checking of the response result indicates a failure, the channel selection processing selects a channel from the frequency hopping pattern table 24 also at the second transmission (Step 78). If the checking of the response result indicates a success (normal), the channel selection processing further checks whether or not a reception result failure channel exists and falls within the channel collection range (Step 75). If the corresponding channel exists, the channel selection processing requests the second transmission as a channel for collecting a channel interference (Step 76). In this step (Step 75), if the checking of the response result indicates a failure, the channel selection processing selects a channel from the frequency hopping pattern table 24 also at the second transmission (Step 78). After the transmission of a transmission request to the RF transmission processing (Step 77), the channel selection processing returns to standing by for activation from the ETH transmission/reception processing (Step 71).

In the present embodiment, in Step 76, a reception failure channel is taken out from the reception result storage table.

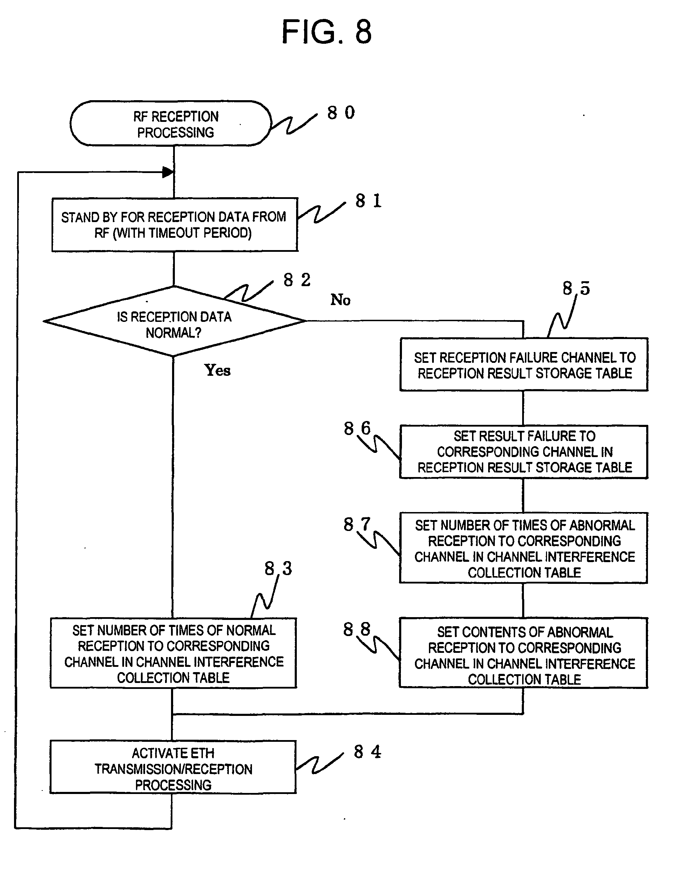

Figure 8 shows a flow chart of the RF reception processing according to Embodiment 1. After the application of power (Step 80), the RF reception processing stands by for reception data from the RF section (Step 81). At the time of the reception from the RF section, the RF reception processing checks a serial number error, a CRC error, and the like in the reception data (Step 82). If the checking indicates a success, the RF reception processing sets the number of times of normal reception to the corresponding channel in the channel interference collection table 37 (Step 83). If the checking indicates a failure, the RF reception processing sets the reception failure channel to the reception result storage table 38 (Step 85), sets a result failure to the corresponding channel in the reception result storage table 38 (Step 86), sets the number of times of abnormal reception to the corresponding channel in the channel interference collection table 37 as the statistical data 45 (Step 87), and sets contents of abnormal reception (a serial number error, a CRC error) to the corresponding channel in the channel interference collection table (Step 88). After the activation of the ETH transmission/reception processing (Step 84), the RF reception processing returns to standing by for reception data from the RF section (Step 81).

### [Embodiment 2]

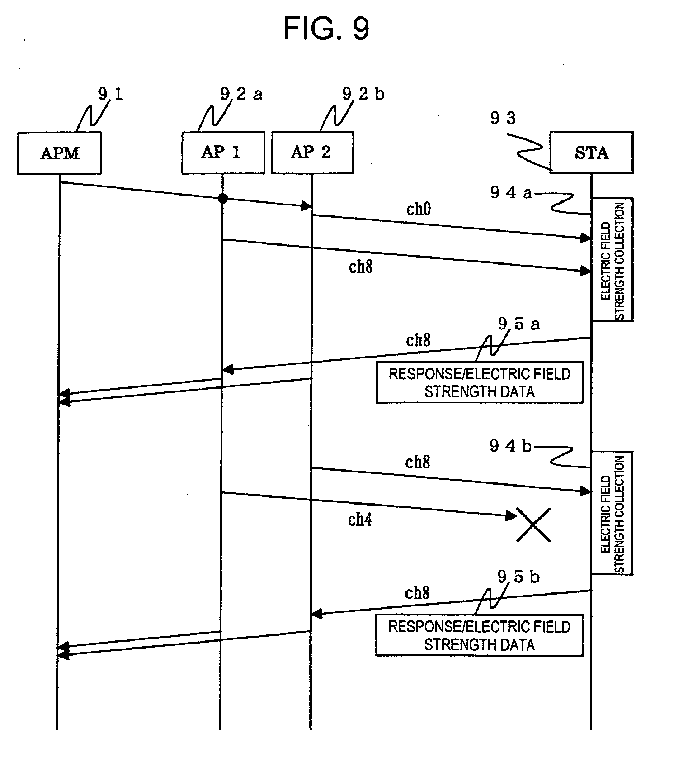

Figure 9 is a diagram illustrating a basic sequence according to Embodiment 2 of the present invention. Describing in order the basic sequence illustrated in Figure 9, similarly to Embodiment 1, an APM 91 broadcasts communication data to APs 92a and 92b (AP 1 and AP 2) in a given cycle. 92a and 92b of the respective AP 1 and AP 2 each acquire a transmission channel from the frequency hopping pattern table 24 stored internally (see Figure 2), and transmit the communication data to a mobile station STA 93. The frequency hopping pattern table 24 is set so that channels used at this time for the transmission from 92a and 92b of the respective adjacent AP 1 and AP 2 are not overlapped with each other. In Figure 9, the channel 0 and the channel 8 are used for the first communication in the first cycle. The mobile station STA 93 searches for a communication channel of the base station in a given cycle, stores a reception electric field strength of a found channel, and transmits to the AP 92 response data together with the reception electric field strength of the channel found as a result of the search, through the found channel.

In the embodiment illustrated in Figure 9, the channel 0 and the channel 8 are found by electric field strength collection 94a, and the response data is transmitted to the AP 1 (92a) as response/electric field strength data 95a through the channel 8. Further, the channel 4 is not found and only the channel 8 is found by second electric field strength collection 94b, and hence the response data is transmitted to the AP 2 (92b) as response/electric field strength data 95b. The APM 91 determines in which of downstream data and upstream data an interference occurs, depending on presence/absence of the electric field strength of the channel used for transmitting the downstream data on the basis of the response data received from each AP 92.

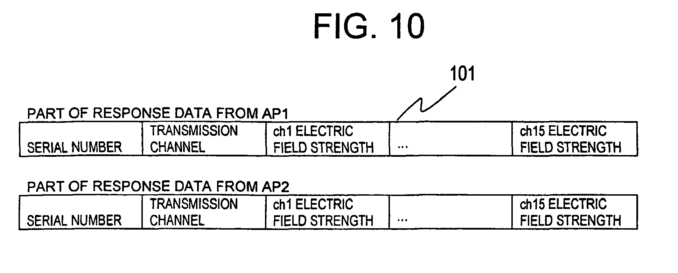

Figure 10 is a diagram illustrating part of response data that the APM 91 receives from each of the APs 92a and 92b. The APM 91 collects channel transmission/reception results of the APs 1 and 2 on the basis of the response data received from each of the APs 92a and 92b. In the collection method therefor, all transmission channels are taken out from response data 101 (response/electric field strength data) received from each of the APs 1 and 2. Next, a channel to which an electric field strength value is set is taken out from each response data, and in the case where the transmission channel and the channel to which the electric field strength value is set are the same as each other, it can be regarded that an interference does not occur in the downstream data. With regard to a transmission channel for which the electric field strength value corresponding thereto is not found, it can be regarded that the downstream data transmission does not reach the SAT 93.

## Claims

1. A radio communications system adapted such that radio communication is performed between a base station (13a, 13b, 13c) and a mobile station (12, 23, 63) through a plurality of channels and the channels for the radio communication are changed, in successive cycles, on a basis of a frequency hopping pattern table (24), the radio communications system comprising:
communication result determination means (35) adapted to determine whether a communication result of each channel is normal or is a reception failure; and
storage means (38) adapted to store therein the communication result of each channel,
**characterized in that** the radio communications system is adapted such that:
when communication in a given cycle through a given channel according to the frequency hopping pattern table is performed normally and a reception failure channel is stored in the storage means, a frequency to be used for the next communication in the cycle is selected as a frequency of the stored reception failure channel irrespective of the frequency hopping pattern table.

2. The radio communications system according to Claim 1, wherein:
the stored reception failure channel is a channel determined as a reception failure from the previous cycle.

3. The radio communications system according to Claim 1, wherein:
the mobile station includes channel reception electric field strength holding means (94a, 94b) that is adapted to search for a communication channel of the base station for each cycle and to hold a reception electric field strength of the channel searched for, and further includes means that is adapted to transmit the reception electric field strength (95a, 95b) of the channel searched for, to thereby transmit the reception electric field strength to the base station through a specific channel.

4. A method of radio communication in which radio communication is performed between a base station (13a, 13b, 13c) and a mobile station (12, 23, 63) through a plurality of channels and the channels for the radio communication are changed, in successive cycles, on a basis of a frequency hopping pattern table (24), the method of radio communication comprising:
determining whether a communication result of each channel is normal or is a reception failure;
storing the communication result of each channel; and
selecting, when communication in a given cycle through a given channel according to the frequency hopping pattern table is performed normally and a reception failure channel is stored, a frequency to be used for the next communication in the cycle as a frequency of the stored reception failure channel irrespective of the frequency hopping pattern table.

5. The method of radio communication according to Claim 4, wherein:
the stored reception failure channel is a channel determined as a reception failure from the previous cycle.

6. The method of radio communication according to Claim 4, wherein:
the mobile station searches for a communication channel of the base station for each cycle and holds a reception electric field strength (95a, 95b) of the channel searched for, to thereby transmit the reception electric field strength to the base station through a specific channel.

## Patentansprüche

1. Funkkommunikationssystem, das so ausgelegt ist, dass Funkkommunikation zwischen einer Basisstation (13a, 13b, 13c) und einer Mobilstation (12, 23, 63) über mehrere Kanäle erfolgt und die Kanäle für die Funkkommunikation in aufeinander folgenden Zyklen aufgrund einer Frequenzsprungmuster-Tabelle (24) geändert werden, wobei das Funkkommunikationssystem umfasst:
eine Einrichtung zum Ermitteln des Kommunikationsergebnisses (35), die so ausgelegt ist, dass sie ermittelt, ob das Kommunikationsergebnis jedes Kanals normal ist oder einen Empfangsfehler darstellt, und
eine Speichereinrichtung (38), die so ausgelegt ist, dass sie das Kommunikationsergebnis jedes Kanals speichert,
**dadurch gekennzeichnet, dass** das Funkkommunikationssystem so ausgelegt ist, dass dann, wenn die Kommunikation in einem gegebenen Zyklus über einen gegebenen Kanal entsprechend der Frequenzsprungmuster-Tabelle normal abläuft und in der Speichereinrichtung ein Empfangsfehler gespeichert ist, die für die nächste Kommunikation in dem Zyklus zu benutzende Frequenz unabhängig von der Frequenzsprungmuster-Tabelle als Frequenz des gespeicherten Empfangsfehlerkanals gewählt wird.

2. Funkkommunikationssystem nach Anspruch 1, wobei der gespeicherte Empfangsfehlerkanal ein als Empfangsfehler aus dem vorhergehenden Zyklus ermittelter Kanal ist.

3. Funkkommunikationssystem nach Anspruch 1, wobei die Mobilstation eine Einrichtung zum Halten der elektrischen Kanalempfangsfeldstärke (94a, 94b) aufweist, die so ausgelegt ist, dass sie für jeden Zyklus nach einem Kommunikationskanal der Basisstation sucht und die elektrische Empfangsfeldstärke des gesuchten Kanals hält, sowie eine Einrichtung, die so ausgelegt ist, dass sie elektrische Empfangsfeldstärke (95a, 95b) des gesuchten Kanals sendet, um so die elektrische Empfangsfeldstärke über einen speziellen Kanal an die Basisstation zu senden.

4. Funkkommunikationsverfahren, in dem Funkkommunikation zwischen einer Basisstation (13a, 13b, 13c) und einer Mobilstation (12, 23, 63) über mehrere Kanäle erfolgt und die Kanäle für die Funkkommunikation in aufeinander folgenden Zyklen aufgrund einer Frequenzsprungmuster-Tabelle (24) geändert werden, wobei das Funkkommunikationsverfahren **dadurch gekennzeichnet ist, dass** es:
ermittelt, ob das Kommunikationsergebnis jedes Kanals normal ist oder einen Empfangsfehler darstellt,
das Kommunikationsergebnis jedes Kanals speichert und
dann, wenn die Kommunikation in einem gegebenen Zyklus über einen gegebenen Kanal entsprechend der Frequenzsprungmuster-Tabelle normal abläuft und ein Empfangsfehler gespeichert ist, die für die nächste Kommunikation in dem Zyklus zu benutzende Frequenz unabhängig von der Frequenzsprungmuster-Tabelle als Frequenz des gespeicherten Empfangsfehlerkanals wählt.

5. Funkkommunikationsverfahren nach Anspruch 4, wobei der gespeicherte Empfangsfehlerkanal ein als Empfangsfehler aus dem vorhergehenden Zyklus ermittelter Kanal ist.

6. Funkkommunikationsverfahren nach Anspruch 4, wobei die Mobilstation für jeden Zyklus nach einem Kommunikationskanal der Basisstation sucht und die elektrische Empfangsfeldstärke (95a, 95b) des gesuchten Kanals hält, um so die elektrische Empfangsfeldstärke über einen speziellen Kanal an die Basisstation zu senden.

## Revendications

1. Système de radiocommunication adapté de sorte qu'une radiocommunication est effectuée entre une station de base (13a, 13b, 13c) et une station mobile (12, 23, 63) à travers une pluralité de canaux et les canaux pour la radiocommunication sont modifiés, selon des cycles successifs, sur la base d'un tableau de modèles de sauts de fréquence (24), le système de radiocommunication comportant :
des moyens de détermination de résultats de communication (35) adaptés pour déterminer si un résultat de communication de chaque canal est normal ou est un échec de réception, et
des moyens de mémorisation (38) adaptés pour mémoriser le résultat de communication de chaque canal,
**caractérisé en ce que** le système de radiocommunication est adapté de sorte que :
lorsqu'une communication dans un cycle donné à travers un canal donné conformément au tableau de modèles de sauts de fréquence est effectuée normalement et qu'un canal d'échec de réception est mémorisé dans les moyens de mémorisation, une fréquence à utiliser pour la communication suivante dans le cycle est sélectionnée en tant que fréquence du canal d'échec de réception mémorisé indépendamment du tableau de modèles de sauts de fréquence.

2. Système de radiocommunication selon la revendication 1, dans lequel :
le canal d'échec de réception mémorisé est un canal déterminé en tant qu'échec de réception du cycle précédent.

3. Système de radiocommunication selon la revendication 1, dans lequel :
la station mobile inclut des moyens de conservation d'intensité de champ électrique de réception de canal (94a, 94b) qui sont adaptés pour rechercher un canal de communication de la station de base pour chaque cycle et pour conserver une intensité de champ électrique de réception du canal recherché, et inclut en outre des moyens qui sont adaptés pour transmettre l'intensité de champ électrique de réception (95a, 95b) du canal recherché, de manière à transmettre l'intensité de champ électrique de réception à la station de base à travers un canal spécifique.

4. Procédé de radiocommunication dans lequel une radiocommunication est effectuée entre une station de base (13a, 13b, 13c) et une station mobile (12, 23, 63) à travers une pluralité de canaux et les canaux pour la radiocommunication sont changés, selon des cycles successifs, sur la base d'un tableau de modèles de sauts de fréquence (24), le procédé de radiocommunication comportant les étapes consistant à :
déterminer si un résultat de communication de chaque canal est normal ou est un échec de réception,
mémoriser le résultat de communication de chaque canal, et
sélectionner, lorsqu'une communication dans un cycle donné à travers un canal donné conformément au tableau de modèles de sauts de fréquence est effectuée normalement et qu'un canal d'échec de réception est mémorisé, une fréquence à utiliser pour la communication suivante dans le cycle en tant que fréquence du canal d'échec de réception mémorisé indépendamment du tableau de modèles de sauts de fréquence.

5. Procédé de radiocommunication selon la revendication 4, dans lequel :
le canal d'échec de réception mémorisé est un canal déterminé en tant qu'échec de réception du cycle précédent.

6. Procédé de radiocommunication selon la revendication 4, dans lequel :
la station mobile recherche un canal de communication de la station de base pour chaque cycle et conserve une intensité de champ électrique de réception (95a, 95b) du canal recherché, de manière à transmettre l'intensité de champ électrique de réception à la station de base à travers un canal spécifique.
